# EUROPEAN PATENT APPLICATION

(11) **EP 4 465 093 A1**
(43) Date of publication of application: **20.11.2024**
(21) Application number: 22933603.7
(22) Date of filing: 26.10.2022
(51) Int. Cl.: G01T 1/20, G21K 4/00

(54) **SCINTILLATOR PANEL, RADIATION DETECTOR, METHOD FOR MANUFACTURING SCINTILLATOR PANEL, AND METHOD FOR MANUFACTURING RADIATION DETECTOR**

(30) Priority: 24.03.2022 JP 2022048187
(71) Applicant: Hamamatsu Photonics K.K., Hamamatsu-shi, Shizuoka 435-8558 (JP)
(72) Inventor: GOTO Keisuke, Hamamatsu-shi, Shizuoka 435-8558 (JP); SAKURAI Jun, Hamamatsu-shi, Shizuoka 435-8558 (JP); JONISHI Hidenori, Hamamatsu-shi, Shizuoka 435-8558 (JP); TOYAMA Shintaro, Hamamatsu-shi, Shizuoka 435-8558 (JP); HATANAKA Masashi, Hamamatsu-shi, Shizuoka 435-8558 (JP); SHIRAKAWA Kazuhiro, Hamamatsu-shi, Shizuoka 435-8558 (JP)
(74) Representative: Grünecker Patent- und Rechtsanwälte PartG mbB
(86) International application number: PCT/JP2022/040009
(87) International publication number: WO 2023/181473

(57) **Abstract**

A scintillator panel includes a support substrate being flexible; a scintillator layer including a plurality of columnar crystals; and an intermediate layer disposed between the support substrate and the scintillator layer. The plurality of columnar crystals include a plurality of first end portions on a support substrate side and a plurality of second end portions on a side opposite to the support substrate. Each of the plurality of first end portions tapers toward the support substrate side. Each of the plurality of second end portions has an end surface along a plane. A part of the intermediate layer is disposed in at least a region between the plurality of first end portions.

## Description

### Technical Field

The present disclosure relates to a scintillator panel, a radiation detector, a method for manufacturing a scintillator panel, and a method for manufacturing a radiation detector.

### Background Art

A scintillator panel including a support substrate and a scintillator layer formed on the support substrate by vapor deposition has been known (for example, refer to Patent Literature 1). Such a scintillator panel may be disposed on a light receiving surface of a sensor panel in a state where the support substrate is located on a side opposite to the sensor panel with respect to the scintillator layer, to constitute a radiation detector.

### Citation List

### Patent Literature

Patent Literature 1: Japanese Patent No. 4451843

### Summary of Invention

### Technical Problem

Unlike a case where the scintillator layer is formed on the light receiving surface of the sensor panel by vapor deposition, the scintillator panel described above requires the optimization of contact with the light receiving surface of the sensor panel. In addition, in the scintillator panel described above, when the support substrate is flexible, it is easy to dispose the scintillator panel on the light receiving surface of the sensor panel, whereas there is a concern that cracks may occur in the scintillator layer.

An object of the present disclosure is to provide a scintillator panel capable of optimizing contact with a light receiving surface of a sensor panel and suppressing the occurrence of cracks in the scintillator layer, a manufacturing method thereof, a radiation detector including such a scintillator panel, and a manufacturing method thereof.

### Solution to Problem

A scintillator panel according to one aspect of the present disclosure includes a support substrate being flexible; a scintillator layer including a plurality of columnar crystals; and an intermediate layer disposed between the support substrate and the scintillator layer, in which the plurality of columnar crystals include a plurality of first end portions on a support substrate side and a plurality of second end portions on a side opposite to the support substrate, each of the plurality of first end portions tapers toward the support substrate side, each of the plurality of second end portions includes an end surface along a plane, and a part of the intermediate layer is disposed in at least a region between the plurality of first end portions.

In the scintillator panel, each of the plurality of second end portions included in the plurality of columnar crystals has the end surface along a plane. Accordingly, when the scintillator layer is disposed on a light receiving surface of a sensor panel in a state where the support substrate is located on a side opposite to the sensor panel with respect to the scintillator layer, contact between the light receiving surface of the sensor panel and the scintillator panel is optimized. In addition, in the scintillator panel, the part of the intermediate layer is disposed in the region between the plurality of first end portions included in the plurality of columnar crystals. Accordingly, even when the scintillator panel is bent, the occurrence of cracks in the scintillator layer is suppressed. Therefore, according to the scintillator panel, contact with the light receiving surface of the sensor panel can be optimized, and the occurrence of cracks in the scintillator layer can be suppressed.

In the scintillator panel according to one aspect of the present disclosure, the part of the intermediate layer may be disposed in at least an entirety of the region between the plurality of first end portions. According to this aspect, the occurrence of cracks in the scintillator layer can be reliably suppressed.

In the scintillator panel according to one aspect of the present disclosure, when a distance between the support substrate and the scintillator layer is D, the part of the intermediate layer may reach a position advanced by D or more from a plurality of tips included in the plurality of first end portions. According to this aspect, the occurrence of cracks in the scintillator layer can be more reliably suppressed.

In the scintillator panel according to one aspect of the present disclosure, when a thickness of the scintillator layer is T, the part of the intermediate layer may reach a position advanced by 0.2T or more from a plurality of tips included in the plurality of first end portions. According to this aspect, the occurrence of cracks in the scintillator layer can be more reliably suppressed.

In the scintillator panel according to one aspect of the present disclosure, the intermediate layer may include a metal layer formed along a surface of each of the plurality of first end portions, and an organic layer disposed in at least the region between the plurality of first end portions with the metal layer interposed between the organic layer and the plurality of first end portions, and the metal layer may have a light-reflecting function or a light-absorbing function. According to this aspect, the intermediate layer capable of exhibiting a light-reflecting function or a light-absorbing function and suppressing the occurrence of cracks in the scintillator layer can be realized.

In the scintillator panel according to one aspect of the present disclosure, the intermediate layer may include an organic layer disposed in at least the region between the plurality of first end portions, and the organic layer may have a light-reflecting function or a light-absorbing function. According to this aspect, the intermediate layer capable of exhibiting a light-reflecting function or a light-absorbing function and suppressing the occurrence of cracks in the scintillator layer can be realized.

In the scintillator panel according to one aspect of the present disclosure, when viewed in a thickness direction of the support substrate, at least a part of an outer edge of the support substrate, at least a part of an outer edge of the scintillator layer, and at least a part of an outer edge of the intermediate layer may coincide with each other. According to this aspect, a region where the scintillator layer is not present can be eliminated at at least the part of the outer edge of the support substrate. Namely, the area of the scintillator layer can be increased by the extent of the region. In other words, the area of the support substrate can be reduced by the extent of the region.

In the scintillator panel according to one aspect of the present disclosure, the plurality of second end portions may be connected to each other. According to this aspect, the occurrence of cracks in the scintillator layer can be more reliably suppressed.

The scintillator panel according to one aspect of the present disclosure may further include a protection layer covering the support substrate, the scintillator layer, and the intermediate layer. According to this aspect, the plurality of columnar crystals having deliquescence can be protected.

The scintillator panel according to one aspect of the present disclosure may further include an adhesive layer disposed on a side opposite to the support substrate with respect to the scintillator layer. According to this aspect, the scintillator panel can be easily and reliably adhered to the light receiving surface of the sensor panel.

In the scintillator panel according to one aspect of the present disclosure, when a thickness of the scintillator layer is T, a thickness of the support substrate may be 0.2T or more. According to this aspect, it is possible to suppress the occurrence of cracks in the scintillator layer due to a local external force acting on a part of the scintillator panel, for example, when the scintillator panel is handled.

A radiation detector according to one aspect of the present disclosure includes the scintillator panel; and a sensor panel including a light receiving surface, in which the scintillator panel is disposed on the light receiving surface in a state where the scintillator layer is located on a sensor panel side with respect to the support substrate.

In the radiation detector, contact between the light receiving surface of the sensor panel and the scintillator panel is optimized. Therefore, according to the radiation detector, an appropriate radiographic image can be acquired.

A method for manufacturing a scintillator panel according to one aspect of the present disclosure is a method for manufacturing the scintillator panel, the method including: a first step of forming the scintillator layer on an auxiliary substrate through vapor deposition; a second step of forming the intermediate layer on the scintillator layer such that the part of the intermediate layer is disposed in at least the region between the first end portions, after the first step; a third step of forming the support substrate on the intermediate layer after the second step; and a fourth step of removing the auxiliary substrate from the scintillator layer after the third step.

According to the method for manufacturing a scintillator panel, it is possible to obtain the scintillator panel in which contact with the light receiving surface of the sensor panel is optimized and the occurrence of cracks in the scintillator layer is suppressed.

The method for manufacturing a scintillator panel according to one aspect of the present disclosure may further include a fifth step of cutting at least the scintillator layer, the intermediate layer, and the support substrate in the thickness direction of the support substrate after the third step and before the fourth step. According to this aspect, the scintillator layer, the intermediate layer, and the support substrate can be collectively cut in a stable state where the scintillator layer, the intermediate layer, and the support substrate are supported by the auxiliary substrate.

In the method for manufacturing a scintillator panel according to one aspect of the present disclosure, in the fifth step, the auxiliary substrate may be cut in the thickness direction of the support substrate, together with the scintillator layer, the intermediate layer, and the support substrate. According to this aspect, the auxiliary substrate can be collectively cut together with the scintillator layer, the intermediate layer, and the support substrate.

The method for manufacturing a scintillator panel according to one aspect of the present disclosure may further include a sixth step of cutting the scintillator layer, the intermediate layer, and the support substrate in the thickness direction of the support substrate after the fourth step. According to this aspect, the scintillator layer, the intermediate layer, and the support substrate can be easily and reliably cut to a predetermined size.

A method for manufacturing a radiation detector according to one aspect of the present disclosure is a method for manufacturing the radiation detector, the method including: a first step of preparing the scintillator panel and the sensor panel; and a second step of disposing the scintillator panel on the light receiving surface such that the support substrate is located on a side opposite to the sensor panel with respect to the scintillator layer, after the first step.

According to the method for manufacturing a radiation detector, it is possible to obtain the radiation detector including the scintillator panel in which contact with the light receiving surface of the sensor panel is optimized and the occurrence of cracks in the scintillator layer is suppressed.

### Advantageous Effects of Invention

According to the present disclosure, it is possible to provide the scintillator panel capable of optimizing contact with the light receiving surface of the sensor panel and suppressing the occurrence of cracks in the scintillator layer, the manufacturing method thereof, the radiation detector including such a scintillator panel, and the manufacturing method thereof.

### Brief Description of Drawings

[FIG. 1] FIG. 1 is a cross-sectional view of a scintillator panel according to one embodiment.
[FIG. 2] FIG. 2 is a cross-sectional view of a radiation detector including the scintillator panel shown in FIG. 1.
[FIG. 3] FIG. 3 is a view showing a method for manufacturing the scintillator panel shown in FIG. 1.
[FIG. 4] FIG. 4 is a view showing the method for manufacturing the scintillator panel shown in FIG. 1.
[FIG. 5] FIG. 5 is a view showing the method for manufacturing the scintillator panel shown in FIG. 1.
[FIG. 6] FIG. 6 is a view showing the method for manufacturing the scintillator panel shown in FIG. 1.
[FIG. 7] FIG. 7 is a table showing characteristics of scintillator panels of Comparative Examples 1 and 2 and Examples 1 and 2.
[FIG. 8] FIG. 8 is a cross-sectional view of a scintillator panel according to a modification example.
[FIG. 9] FIG. 9 is a cross-sectional view of a scintillator panel according to a modification example.
[FIG. 10] FIG. 10 is a cross-sectional view of a scintillator panel according to a modification example.
[FIG. 11] FIG. 11 is a cross-sectional view of a scintillator panel according to a modification example.
[FIG. 12] FIG. 12 is a cross-sectional view of a scintillator panel according to a modification example.
[FIG. 13] FIG. 13 is a cross-sectional view of a scintillator panel according to a modification example.
[FIG. 14] FIG. 14 is a cross-sectional view of a scintillator panel according to a modification example.
[FIG. 15] FIG. 15 is a cross-sectional view of a scintillator panel according to a modification example.
[FIG. 16] FIG. 16 is a cross-sectional view of a radiation detector according to a modification example.
[FIG. 17] FIG. 17 is a cross-sectional view of a radiation detector according to a modification example.

### Description of Embodiments

Hereinafter, an embodiment of the present disclosure will be described in detail with reference to the drawings. Incidentally, in the drawings, the same or equivalent parts are denoted by the same reference signs, and duplicate descriptions will be omitted.

### [Configuration of scintillator panel]

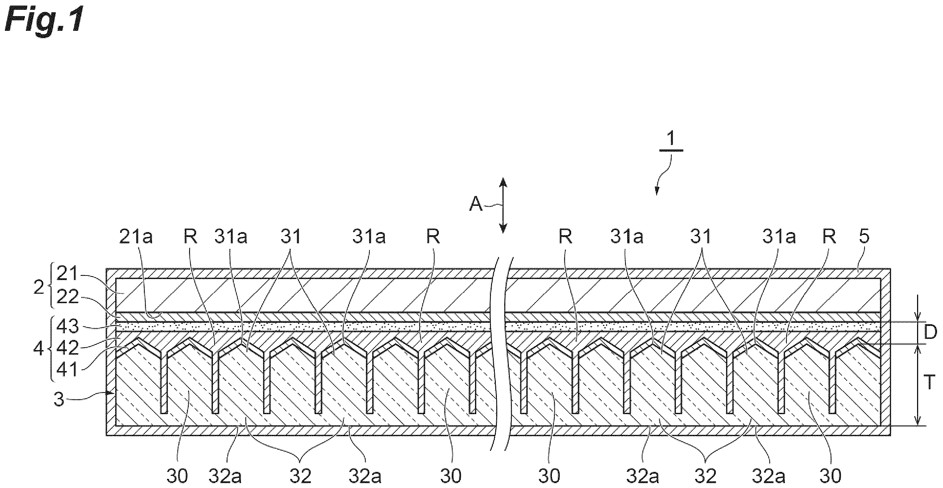

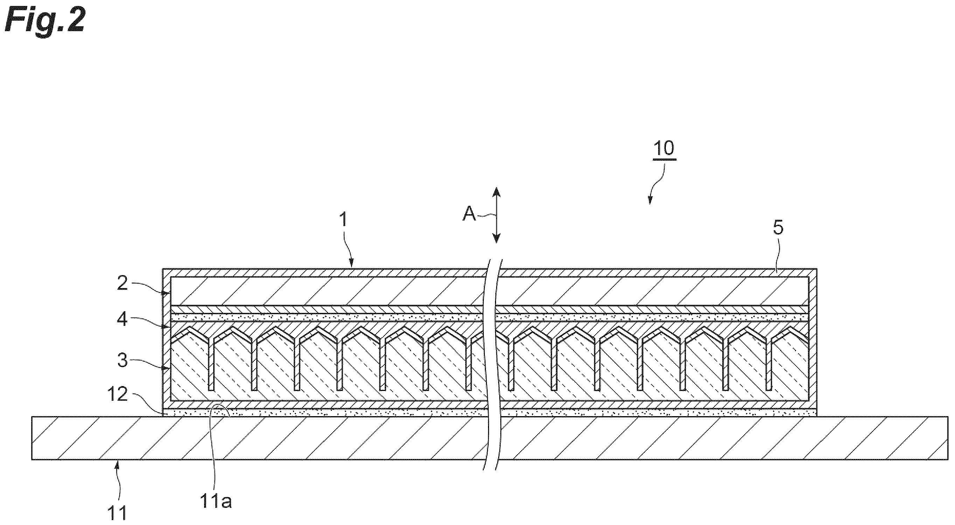

As shown in FIG. 1, a scintillator panel 1 includes a support substrate 2, a scintillator layer 3, an intermediate layer 4, and a protection layer 5. The intermediate layer 4 is disposed between the support substrate 2 and the scintillator layer 3. When viewed in a thickness direction of the support substrate 2 (hereinafter, referred to as a "direction A"), an outer edge of the support substrate 2, an outer edge of the scintillator layer 3, and an outer edge of the intermediate layer 4 coincide with each other. Namely, side surfaces of the support substrate 2, side surfaces of the scintillator layer 3, and side surfaces of the intermediate layer 4 are flush with each other. As shown in FIG. 2, the scintillator panel 1 constitutes a radiation detector 10, together with a sensor panel 11. In the radiation detector 10, when radiation (for example, X-ray) is incident on the scintillator panel 1, scintillation light is generated in the scintillator panel 1, and the scintillation light is detected by the sensor panel 11. The radiation detector 10 is used as a radiation imaging device, for example, in a medical radiographic image diagnostic device, a non-destructive inspection device, and the like.

As shown in FIG. 1, the support substrate 2 includes an organic layer 21 and an inorganic layer 22. The inorganic layer 22 is formed on a surface 21a of the organic layer 21, and functions as a moisture barrier layer. The material of the organic layer 21 is, for example, PET, PEN, PI, PP, PE, PU, PMMA, or the like. A thickness of the organic layer 21 is, for example, 30 µm or more and 250 µm or less. The material of the inorganic layer 22 is, for example, Al, Cu, Ti, Fe, SUS, or the like. A thickness of the inorganic layer 22 is, for example, 10 µm or more and 100 µm or less. The support substrate 2 is flexible. The support substrate 2 can be bent to have, for example, a radius of curvature of 30 mm or more and 120 mm or less. When a thickness of the scintillator layer 3 to be described later is T, a thickness of the support substrate 2 is 0.2T or more. Incidentally, the support substrate 2 may be a substrate formed of a single layer, or a substrate formed of a plurality of layers. In addition, a functional film such as an easy-adhesion coating, an antistatic coating, or a moisture barrier film (polyparaxylylene film) may be formed on a surface of the support substrate 2. In addition, the thickness of the support substrate 2 may be 0.5T or more, or may be T or more.

The scintillator layer 3 is disposed on one side with respect to the support substrate 2 (for example, a side on which the inorganic layer 22 is disposed with respect to the organic layer 21). The scintillator layer 3 includes a plurality of columnar crystals 30. The plurality of columnar crystals 30 are arranged along a plane perpendicular to the direction A. Each of the columnar crystals 30 extends in the direction A. The material of the scintillator layer 3 is, for example, CsI: Tl (cesium iodide containing thallium as an activator), CsI:Na (cesium iodide containing sodium as an activator), CsI:Ce (cesium iodide containing cerium as an activator), CsI:TI,Eu (cesium iodide containing thallium and europium as activators), or the like. The thickness of the scintillator layer 3 is, for example, 50 µm or more and 1000 µm or less (preferably 50 µm or more and 400 µm or less).

The plurality of columnar crystals 30 include a plurality of first end portions 31 on a support substrate 2 side and a plurality of second end portions 32 on a side opposite to the support substrate 2. Each of the first end portions 31 tapers toward the support substrate 2 side. A height of each of the first end portions 31 (a width of each of the first end portions 31 in the direction A) is, for example, 2 µm or more and 5 µm or less. A taper angle of each of the first end portions 31 is, for example, 60 degrees or more and 100 degrees or less. Each of the second end portions 32 has an end surface 32a along a plane perpendicular to the direction A. The plurality of second end portions 32 are connected to each other. A plurality of the end surfaces 32a are connected to each other in a flush state. Incidentally, the thickness of the scintillator layer 3 is the average value of the lengths of the columnar crystals 30 in the direction A. In other words, the thickness of the scintillator layer 3 is a distance between a plane including a plurality of tips 31a included in the plurality of first end portions 31 and a plane including the plurality of end surfaces 32a included in the plurality of second end portions 32.

The intermediate layer 4 includes a metal layer 41, an organic layer 42, and an adhesive layer 43. The metal layer 41 is formed along a surface of each of the first end portions 31. The metal layer 41 is formed directly on the surface of each of the first end portions 31. The metal layer 41 has a light-reflecting function (a function of reflecting scintillation light) or a light-absorbing function (a function of absorbing scintillation light). The metal layer 41 is made of, for example, Al, Cr, Ni, Ag, Ti, Cu, Au, or the like. A thickness of the metal layer 41 is, for example, 10 nm or more and 1000 nm or less. The organic layer 42 is disposed in a region R between the plurality of first end portions 31 with the metal layer 41 interposed between the organic layer 42 and the plurality of first end portions 31, and covers the plurality of first end portions 31. The material of the organic layer 42 is, for example, parylene (polyparaxylene). A thickness of a part of the organic layer 42 which is located on the support substrate 2 side with respect to the plane including the plurality of tips 3 1a is, for example, 0.5 µm or more and 20 µm or less. The adhesive layer 43 is disposed between the support substrate 2 and the organic layer 42. The support substrate 2 is adhered to the organic layer 42 by the adhesive layer 43. The material of the adhesive layer 43 is a pressure sensitive adhesive (that does not harden after adhesion) or an adhesive (that hardens after adhesion). A thickness of the adhesive layer 43 is, for example, 0.1 µm or more and 100 µm or less (preferably 25 µm or less).

Apart of the intermediate layer 4 is disposed in at least the region R between the plurality of first end portions 31. In the present embodiment, a part of the organic layer 42 is disposed in the entirety of the region R between the plurality of first end portions 31, and enters gaps between the plurality of columnar crystals 30 via the region R. Here, when a distance between the support substrate 2 and the scintillator layer 3 (a distance between a "surface on a scintillator layer 3 side of the support substrate 2" and the "plane including the plurality of tips 31a") is D, the part of the organic layer 42 reaches a position advanced by D or more from the plurality of tips 31a. In addition, when the thickness of the scintillator layer 3 is T, the part of the organic layer 42 reaches a position advanced by 0.2T or more from the plurality of tips 31a. As one example, D is 10 µm or more and 20 µm or less, T is 50 µm or more and 400 µm or less, and the part of the organic layer 42 reaches a position advanced by a distance of 100 µm or more and 200 µm or less from the plurality of tips 31a. In the present embodiment, the part of the organic layer 42 reaches the plurality of second end portions 32 between the plurality of columnar crystals 30.

The protection layer 5 covers the support substrate 2, the scintillator layer 3, and the intermediate layer 4. The material of the protection layer 5 is, for example, parylene (polyparaxylene). A thickness of the protection layer 5 is, for example, approximately 5 µm.

### [Configuration of radiation detector]

As shown in FIG. 2, the radiation detector 10 includes the scintillator panel 1 described above, the sensor panel 11, and an adhesive layer 12. The sensor panel 11 has a light receiving surface 11a. A plurality of photoelectric transducers (not shown) are provided on a part along the light receiving surface 11a of the sensor panel 11. Each of the photoelectric transducers constitutes a pixel, and outputs an electrical signal according to incident scintillation light.

The scintillator panel 1 is disposed on the light receiving surface 11a in a state where the scintillator layer 3 is located on a sensor panel 11 side with respect to the support substrate 2. The adhesive layer 12 is disposed between the light receiving surface 11a and the scintillator panel 1. The scintillator panel 1 is adhered to the sensor panel 11 by the adhesive layer 12. The material of the adhesive layer 12 is an organic material having optical transparency, for example, an optical clear adhesive (OCA) or the like. A thickness of the adhesive layer 12 is, for example, 0.1 µm or more and 100 µm or less (preferably 25 µm or less). Incidentally, the scintillator panel 1 may include the adhesive layer 12 disposed on the side opposite to the support substrate 2 with respect to the scintillator layer 3.

### [Method for manufacturing scintillator panel]

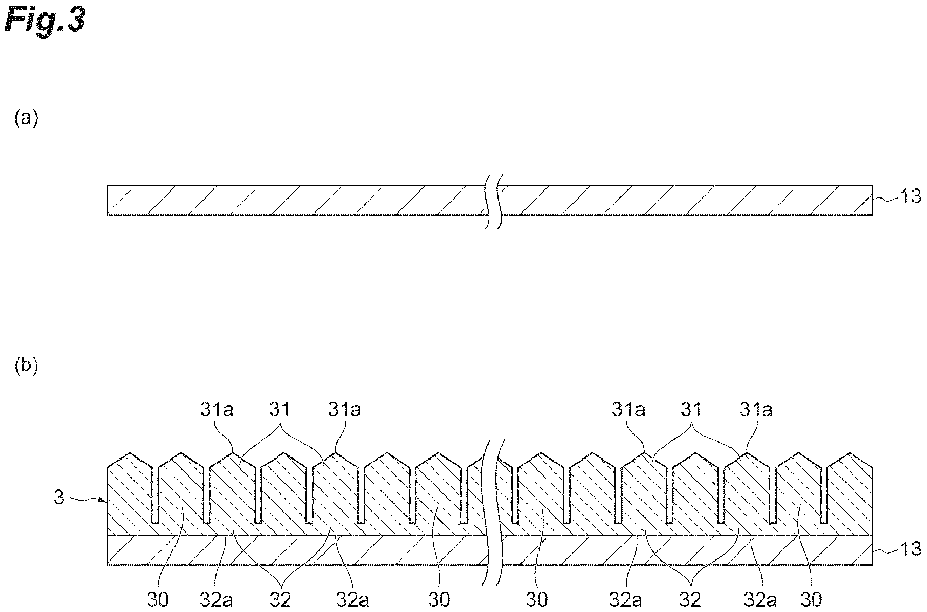

A method for manufacturing the scintillator panel 1 described above will be described. First, as shown in (a) in FIG. 3, an auxiliary substrate 13 is prepared. The material of the auxiliary substrate 13 is, for example, PET, PEN, PI, PMMA, AL, SUS, glass, or the like. In order to improve smoothness and peelability, for example, a coating such as acrylic, fluorine, silicone, alumina, ITO, SiO₂, or the like may be applied to the auxiliary substrate 13. A thickness of the auxiliary substrate 13 is, for example, 0.1 mm or more and 0.5 mm or less. Subsequently, as shown in (b) in FIG. 3, the scintillator layer 3 is formed on the auxiliary substrate 13 by vapor deposition (first step). In the present embodiment, the scintillator layer 3 is formed on the auxiliary substrate 13 by evaporation. Accordingly, in the plurality of columnar crystals 30, the plurality of second end portions 32 are located on an auxiliary substrate 13 side, and the plurality of first end portions 31 are located on a side opposite to the auxiliary substrate 13. Incidentally, an example of vapor deposition other than evaporation is sputtering.

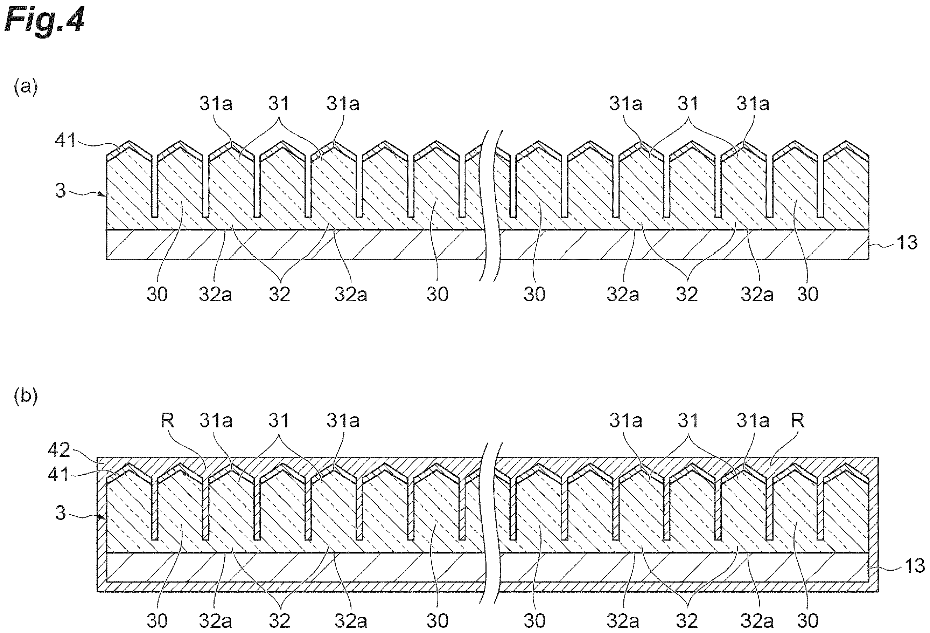

Subsequently, as shown in (a) in FIG. 4, the metal layer 41 is formed on the surface of each of the first end portions 31 by evaporation. Subsequently, as shown in (b) in FIG. 4, the organic layer 42 is formed by CVD to cover the auxiliary substrate 13, the scintillator layer 3, and the metal layer 41 (second step). Accordingly, the part of the organic layer 42 is disposed in the entirety of the region R between the plurality of first end portions 31, and further enters the gaps between the plurality of columnar crystals 30 via the region R.

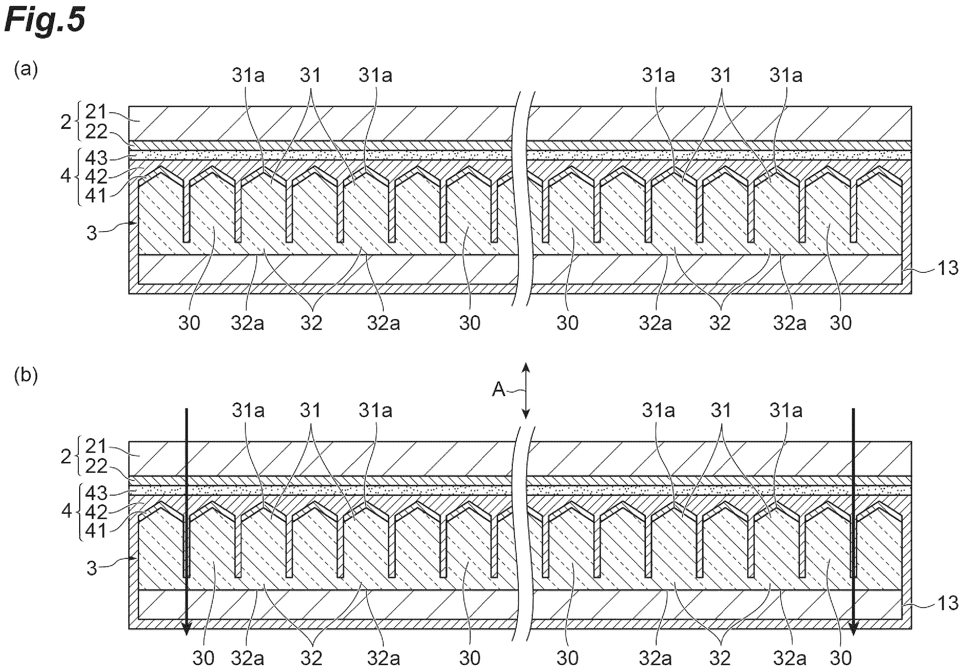

Subsequently, as shown in (a) in FIG. 5, the support substrate 2 is adhered to the organic layer 42 by the adhesive layer 43. Namely, the support substrate 2 is formed on the intermediate layer 4 composed of the metal layer 41, the organic layer 42, and the adhesive layer 43 (third step). Subsequently, as shown in (b) in FIG. 5, the auxiliary substrate 13, the scintillator layer 3, the intermediate layer 4, and the support substrate 2 are cut in the direction A (fifth step). Accordingly, side surfaces of the auxiliary substrate 13, side surfaces of the scintillator layer 3, side surfaces of the intermediate layer 4, and side surfaces of the support substrate 2 are flush with each other.

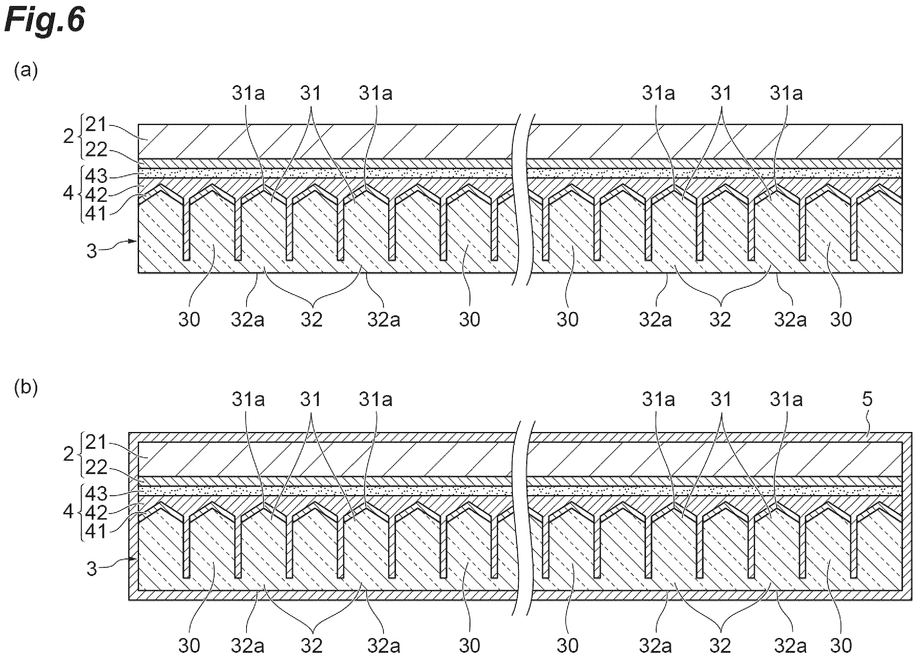

Subsequently, as shown in (a) in FIG. 6, the auxiliary substrate 13 is removed from the scintillator layer 3 (fourth step). Accordingly, the plurality of end surfaces 32a included in the plurality of second end portions 32 appear. Subsequently, as shown in (b) in FIG. 6, the protection layer 5 is formed by CVD to cover the support substrate 2, the scintillator layer 3, and the intermediate layer 4. Accordingly, the scintillator panel 1 is obtained.

### [Method for manufacturing radiation detector]

A method for manufacturing the radiation detector 10 described above will be described. First, as shown in FIG. 2, the scintillator panel 1 and the sensor panel 11 are prepared (first step). Subsequently, in a state where the support substrate 2 is located on the side opposite to the sensor panel 11 with respect to the scintillator layer 3, the scintillator panel 1 is adhered to the sensor panel 11 by the adhesive layer 12. Namely, the scintillator panel 1 is disposed on the light receiving surface 11a such that the support substrate 2 is located on the side opposite to the sensor panel 11 with respect to the scintillator layer 3 (second step). Accordingly, the radiation detector 10 is obtained.

### [Actions and effects]

In the scintillator panel 1, each of the plurality of second end portions 32 included in the plurality of columnar crystals 30 has the end surface 32a along a plane. Accordingly, when the scintillator layer 3 is disposed on the light receiving surface 11a of the sensor panel 11 in a state where the support substrate 2 is located on the side opposite to the sensor panel 11 with respect to the scintillator layer 3, contact between the light receiving surface 11a of the sensor panel 11 and the scintillator panel 1 is optimized. In addition, in the scintillator panel 1, the part of the intermediate layer 4 is disposed in the region R between the plurality of first end portions 31 included in the plurality of columnar crystals 30. Accordingly, even when the scintillator panel 1 is bent, the occurrence of cracks in the scintillator layer 3 is suppressed. As a specific example, when the scintillator panel 1 is bent such that the plurality of second end portions 32 separate from each other, the approach of the plurality of first end portions 31 to each other is suppressed, and when the scintillator panel 1 is bent such that the plurality of second end portions 32 approach each other, the separation of the plurality of first end portions 31 from each other is suppressed. As a result, no matter how the scintillator panel 1 is bent, the occurrence of cracks in the scintillator layer 3 is suppressed. As described above, according to the scintillator panel 1, contact with the light receiving surface 11a of the sensor panel 11 can be optimized, and the occurrence of cracks in the scintillator layer 3 can be suppressed.

In the scintillator panel 1, since the part of the intermediate layer 4 is disposed in the region R between the plurality of first end portions 31 included in the plurality of columnar crystals 30, adhesion between the support substrate 2 and the scintillator layer 3 is also improved, and the floating of the scintillator layer 3 at the outer edge of the support substrate 2 is also suppressed.

In the scintillator panel 1, the part of the intermediate layer 4 is disposed in the entirety of the region R between the plurality of first end portions 31. Accordingly, the occurrence of cracks in the scintillator layer 3 can be reliably suppressed.

In the scintillator panel 1, when the distance between the support substrate 2 and the scintillator layer 3 is D, the part of the intermediate layer 4 reaches the position advanced by D or more from the plurality of tips 31a included in the plurality of first end portions 31. Accordingly, the occurrence of cracks in the scintillator layer 3 can be more reliably suppressed.

In the scintillator panel 1, when the thickness of the scintillator layer 3 is T, the part of the intermediate layer 4 reaches the position advanced by 0.2T or more from the plurality of tips 31a included in the plurality of first end portions 31. Accordingly, the occurrence of cracks in the scintillator layer 3 can be more reliably suppressed.

In the scintillator panel 1, the intermediate layer 4 includes the metal layer 41 formed along the surface of each of the plurality of first end portions 31, and the organic layer 42 disposed in the region R between the plurality of first end portions 31 with the metal layer 41 interposed between the organic layer 42 and the plurality of first end portions 31, and the metal layer 41 has a light-reflecting function or a light-absorbing function. Accordingly, the intermediate layer 4 capable of exhibiting a light-reflecting function or a light-absorbing function and suppressing the occurrence of cracks in the scintillator layer 3 can be realized. Incidentally, in a case where the metal layer 41 is formed directly on the surface of each of the first end portions 31, even when abnormal growth occurs in some of the plurality of columnar crystals 30, a cavity is less likely to be formed between the scintillator layer 3 and the metal layer 41.

In the scintillator panel 1, when viewed in the direction A, the outer edge of the support substrate 2, the outer edge of the scintillator layer 3, and the outer edge of the intermediate layer 4 coincide with each other. Accordingly, a region where the scintillator layer 3 is not present can be eliminated at the outer edge of the support substrate 2. Namely, the area of the scintillator layer 3 can be increased by the extent of the region. In other words, the area of the support substrate 2 can be reduced by the extent of the region.

In the scintillator panel 1, the plurality of second end portions 32 are connected to each other. Accordingly, the occurrence of cracks in the scintillator layer 3 can be more reliably suppressed.

In the scintillator panel 1, the support substrate 2, the scintillator layer 3, and the intermediate layer 4 are covered with the protection layer 5. Accordingly, the plurality of columnar crystals 30 having deliquescence can be protected.

In the scintillator panel 1, the adhesive layer 12 is disposed on the side opposite to the support substrate 2 with respect to the scintillator layer 3. Accordingly, the scintillator panel 1 can be easily and reliably adhered to the light receiving surface 1 1a of the sensor panel 11.

In the scintillator panel 1, when the thickness of the scintillator layer 3 is T, the thickness of the support substrate 2 is 0.2T or more. Accordingly, it is possible to suppress the occurrence of cracks in the scintillator layer 3 due to a local external force acting on a part of the scintillator panel 1, for example, when the scintillator panel 1 is handled.

In the radiation detector 10, contact between the light receiving surface 11a of the sensor panel 11 and the scintillator panel 1 is optimized. As a specific example, a cavity is less likely to be formed or foreign matter is less likely to enter between the light receiving surface 11a and the scintillator panel 1. Therefore, according to the radiation detector 10, an appropriate radiographic image can be acquired. For example, when the metal layer 41 has a light-reflecting function, a high-luminance radiographic image can be acquired, and when the metal layer 41 has a light-absorbing function, a high-resolution radiographic image can be acquired.

According to the method for manufacturing the scintillator panel 1, it is possible to obtain the scintillator panel 1 in which contact with the light receiving surface 11a of the sensor panel 11 is optimized and the occurrence of cracks in the scintillator layer 3 is suppressed. Incidentally, adhesion between the scintillator layer 3 and the support substrate 2 is increased by the intermediate layer 4, whereas adhesion between the scintillator layer 3 and the auxiliary substrate 13 is reduced due to each of the plurality of second end portions 32 having the end surface 32a along a plane, so that the auxiliary substrate 13 can be easily and reliably peeled from the scintillator layer 3.

In the method for manufacturing the scintillator panel 1, the auxiliary substrate 13, the scintillator layer 3, the intermediate layer 4, and the support substrate 2 are cut in the direction A. Accordingly, the auxiliary substrate 13, the scintillator layer 3, the intermediate layer 4, and the support substrate 2 can be collectively cut in a stable state where the scintillator layer 3, the intermediate layer 4, and the support substrate 2 are supported by the auxiliary substrate 13.

According to the method for manufacturing the radiation detector 10, it is possible to obtain the radiation detector 10 including the scintillator panel 1 in which contact with the light receiving surface 11a of the sensor panel 11 is optimized and the occurrence of cracks in the scintillator layer 3 is suppressed.

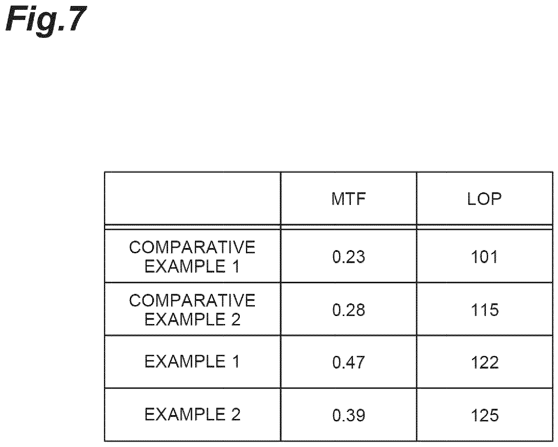

FIG. 7 is a table showing characteristics of scintillator panels of Comparative Examples 1 and 2 and Examples 1 and 2. The scintillator panel of Comparative Example 1 includes a support substrate; a scintillator layer formed directly on the support substrate by evaporation; and a parylene layer covering a plurality of tip portions of a plurality of columnar crystals included in the scintillator layer, and the parylene layer is disposed on a light receiving surface of a sensor panel with an adhesive layer interposed therebetween. The scintillator panel of Comparative Example 2 includes a support substrate and a scintillator layer formed directly on the support substrate by evaporation, and a plurality of tip portions of a plurality of columnar crystals included in the scintillator layer are disposed on a light receiving surface of a sensor panel with an adhesive layer interposed therebetween. The scintillator panel of Example 1 includes a support substrate; a scintillator layer disposed such that a plurality of tip portions (first end portions) of a plurality of columnar crystals are located on a support substrate side; and a parylene layer (intermediate layer) disposed between the support substrate and the scintillator layer, and a plurality of root portions (second end portions) of the plurality of columnar crystals are disposed directly on a light receiving surface of a sensor panel. The scintillator panel of Example 2 includes a support substrate; a scintillator layer disposed such that a plurality of tip portions (first end portions) of a plurality of columnar crystals are located on a support substrate side; and a parylene layer (intermediate layer) disposed between the support substrate and the scintillator layer, and a plurality of root portions (second end portions) of the plurality of columnar crystals are disposed on a light receiving surface of a sensor panel with an adhesive layer interposed therebetween.

As shown in FIG. 7, MTFs (resolution characteristic at a frequency of 3 L/mm) obtained by the scintillator panels of Examples 1 and 2 were closer to 1 than MTFs obtained by the scintillator panels of Comparative Examples 1 and 2. From this result, it was found that higher-resolution radiographic images could be acquired with the scintillator panels of Examples 1 and 2 than with the scintillator panels of Comparative Examples 1 and 2. In addition, LOPs (light output (luminance) characteristic) obtained by the scintillator panels of Examples 1 and 2 had larger values than LOPs obtained by the scintillator panels of Comparative Examples 1 and 2. From this result, it was found that higher-luminance radiographic images could be acquired with the scintillator panels of Examples 1 and 2 than with the scintillator panels of Comparative Examples 1 and 2.

### [Modification examples]

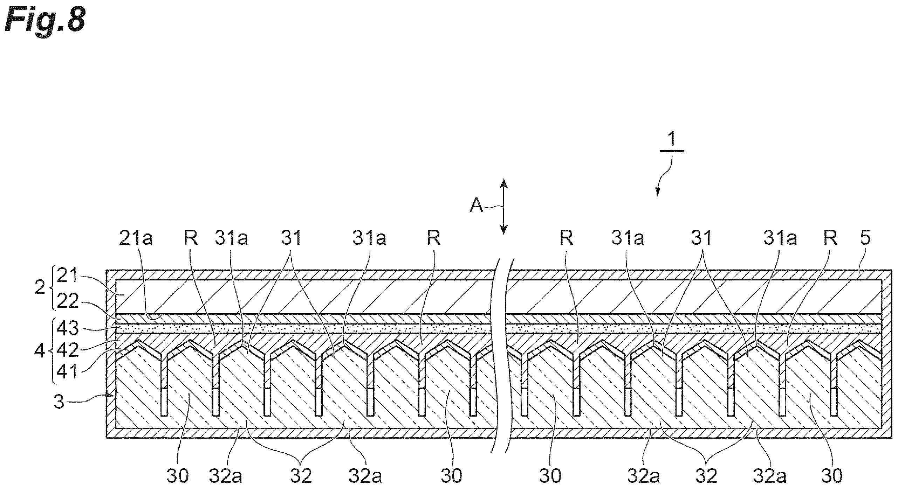

The present disclosure is not limited to the above-described embodiment. For example, in the scintillator panel 1, a part of the intermediate layer 4 may be disposed in at least the region R between the plurality of first end portions 31. Further, in the scintillator panel 1, the part of the intermediate layer 4 may be disposed in at least a part of the region R. Here, the modifiability of the intermediate layer 4 will be described with reference to FIGS. 8 to 14.

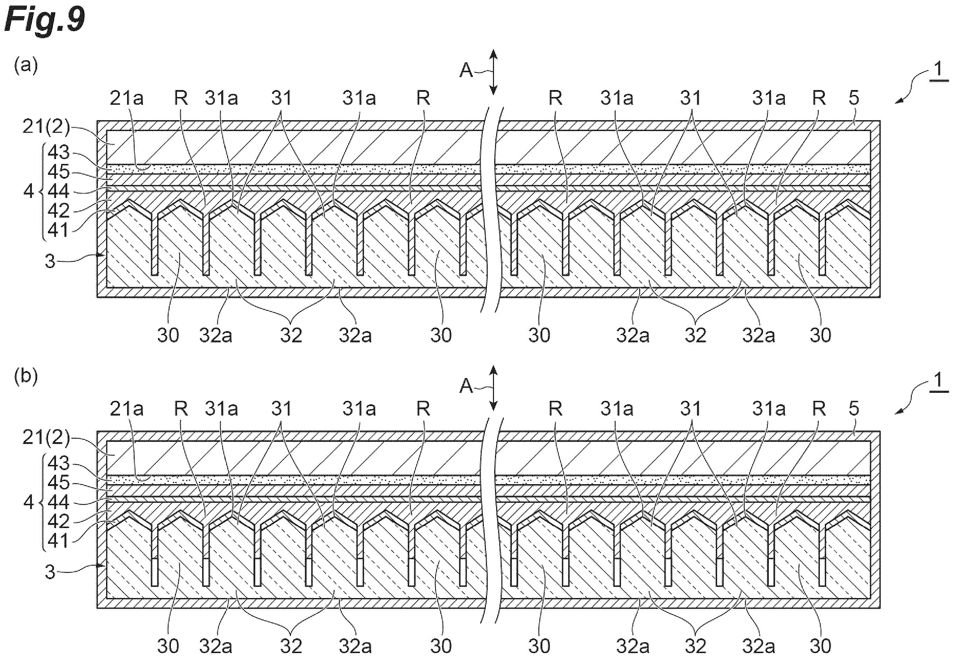

As shown in FIG. 8, a part of the organic layer 42 may not reach the second end portions 32 between the plurality of columnar crystals 30. As shown in (a) and (b) in FIG. 9, the intermediate layer 4 may include the metal layer 41, the organic layer 42, an inorganic layer 44, an organic layer 45, and the adhesive layer 43. The inorganic layer 44 is disposed between the organic layer 42 and the adhesive layer 43, and functions as a moisture barrier layer. The material of the inorganic layer 44 is, for example, Al, Cr, Ni, Ag, Ti, Cu, Au, SiO₂, Al₂O₃, SiON, SiN, or the like. The organic layer 45 is disposed between the inorganic layer 44 and the adhesive layer 43. The material of the organic layer 45 is, for example, parylene (polyparaxylene). In this case, the support substrate 2 includes the organic layer 21, and may not include the inorganic layer 22. In addition, a part of the organic layer 42 may reach the second end portions 32 between the plurality of columnar crystals 30 as shown in (a) in FIG. 9, or may not reach the second end portions 32 between the plurality of columnar crystals 30 as shown in (b) in FIG. 9.

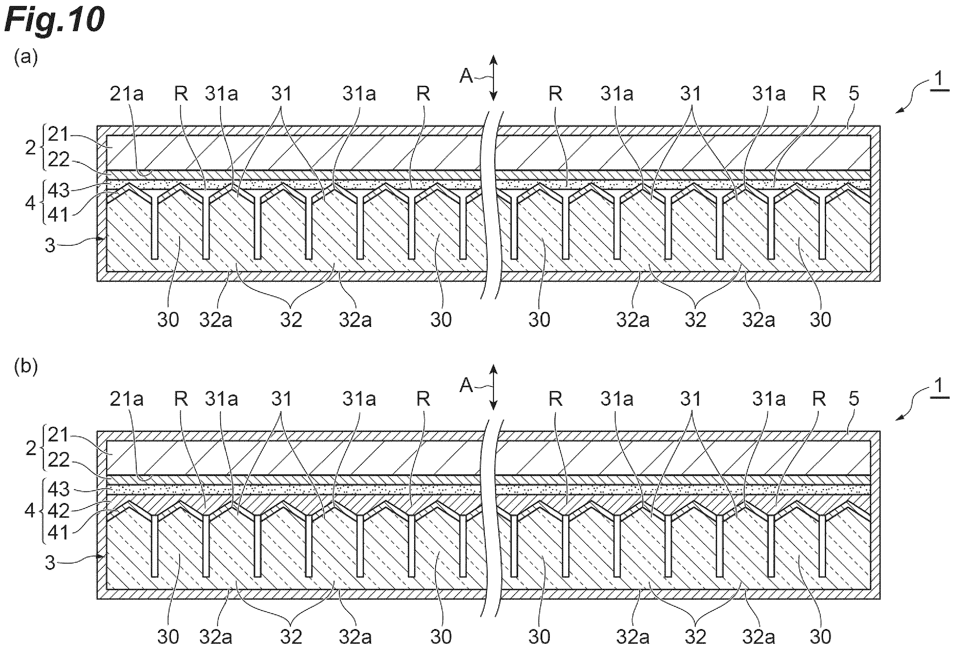

As shown in (a) in FIG. 10, the intermediate layer 4 includes the metal layer 41 and the adhesive layer 43, and may not include the organic layer 42. In this case, a part of the adhesive layer 43 is disposed in the region R between the plurality of first end portions 31. As shown in (b) in FIG. 10, a part of the organic layer 42 may be disposed only in the region R between the plurality of first end portions 31.

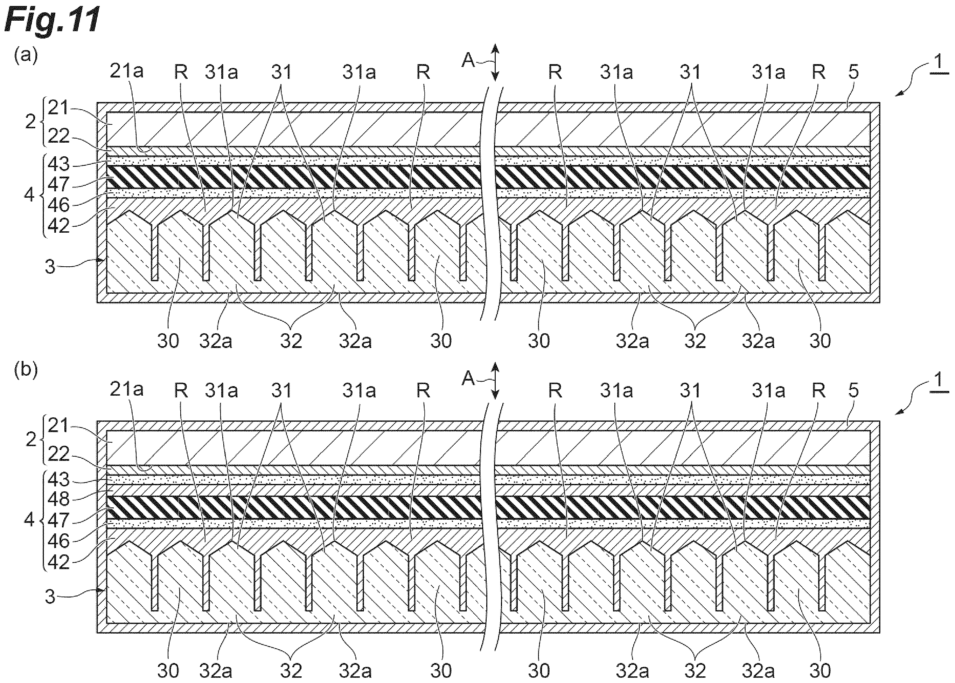

As shown in (a) and (b) in FIG. 11, the intermediate layer 4 includes the organic layer 42, an adhesive layer 46, an organic layer 47, and the adhesive layer 43, and may not include the metal layer 41. The organic layer 47 is disposed between the organic layer 42 and the adhesive layer 43, and has a light-reflecting function or a light-absorbing function. The organic layer 47 is, for example, a sheet containing a pigment. The material of the sheet is, for example, PET, PEN, PI, PP, PE, PU, PMMA, or the like. When the organic layer 47 has a light-reflecting function, the pigment is, for example, TiO₂ or the like. When the organic layer 47 has a light-absorbing function, the pigment is, for example, C or the like. A thickness of the organic layer 47 is, for example, 30 µm or more and 250 µm or less. The adhesive layer 46 is disposed between the organic layer 42 and the organic layer 47. The organic layer 47 is adhered to the organic layer 42 by the adhesive layer 46. In this case, the support substrate 2 may be adhered to the organic layer 47 by the adhesive layer 43 as shown in (a) in FIG. 11, or may be adhered to an organic layer 48 formed on the organic layer 47 by the adhesive layer 43 as shown in (b) in FIG. 11. The material of the organic layer 48 is, for example, parylene (polyparaxylene).

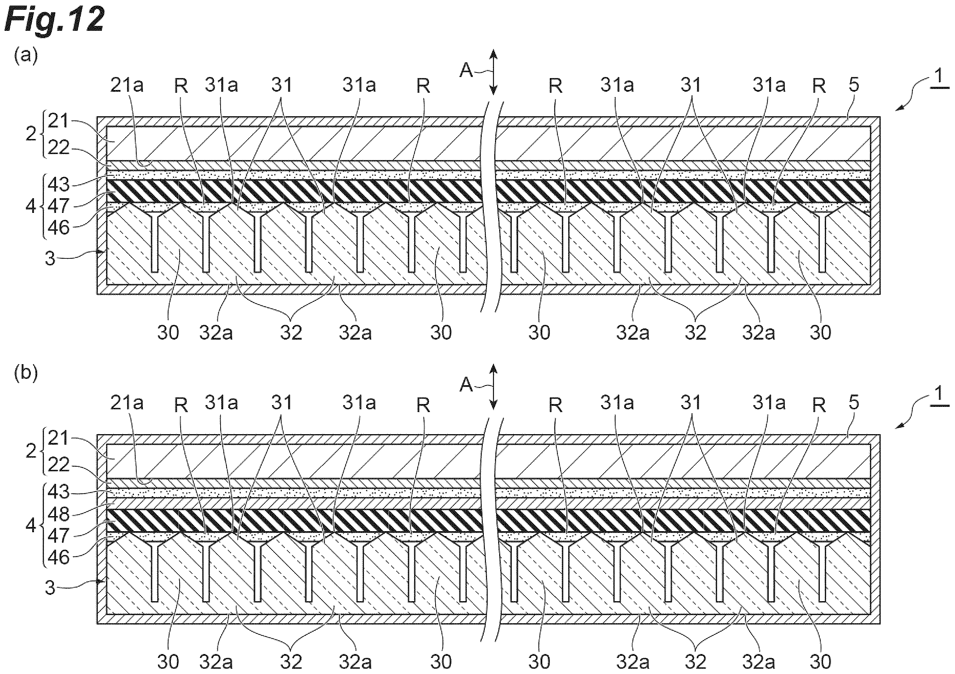

As shown in (a) and (b) in FIG. 12, the intermediate layer 4 includes the adhesive layer 46, the organic layer 47, and the adhesive layer 43, and may not include the metal layer 41 and the organic layer 42. The intermediate layer 4 shown in (a) in FIG. 12 differs from the intermediate layer 4 shown in (a) in FIG. 11 in that a part of the adhesive layer 46 is disposed in the region R between the plurality of first end portions 31. The intermediate layer 4 shown in (b) in FIG. 12 differs from the intermediate layer 4 shown in (b) in FIG. 11 in that a part of the adhesive layer 46 is disposed in the region R between the plurality of first end portions 31.

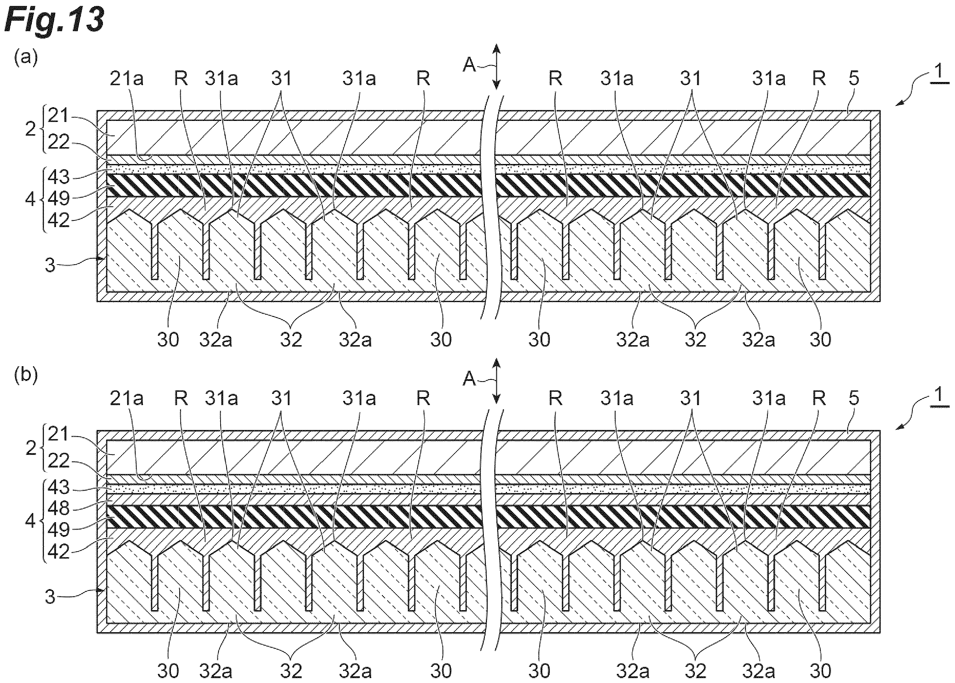

As shown in (a) and (b) in FIG. 13, the intermediate layer 4 includes the organic layer 42, an organic layer 49, and the adhesive layer 43, and may not include the metal layer 41. The organic layer 49 is disposed between the organic layer 42 and the adhesive layer 43, and has a light-reflecting function or a light-absorbing function. The organic layer 49 is, for example, a coating film containing a pigment. The material of the coating film is, for example, epoxy, silicone, fluorine, urethane, acrylic, or the like. When the organic layer 49 has a light-reflecting function, the pigment is, for example, TiO₂ or the like. When the organic layer 49 has a light-absorbing function, the pigment is, for example, C or the like. A thickness of the organic layer 49 is, for example, 5 µm or more and 250 µm or less. In this case, the support substrate 2 may be adhered to the organic layer 49 by the adhesive layer 43 as shown in (a) in FIG. 13, or may be adhered to the organic layer 48 formed on the organic layer 49 by the adhesive layer 43 as shown in (b) in FIG. 13.

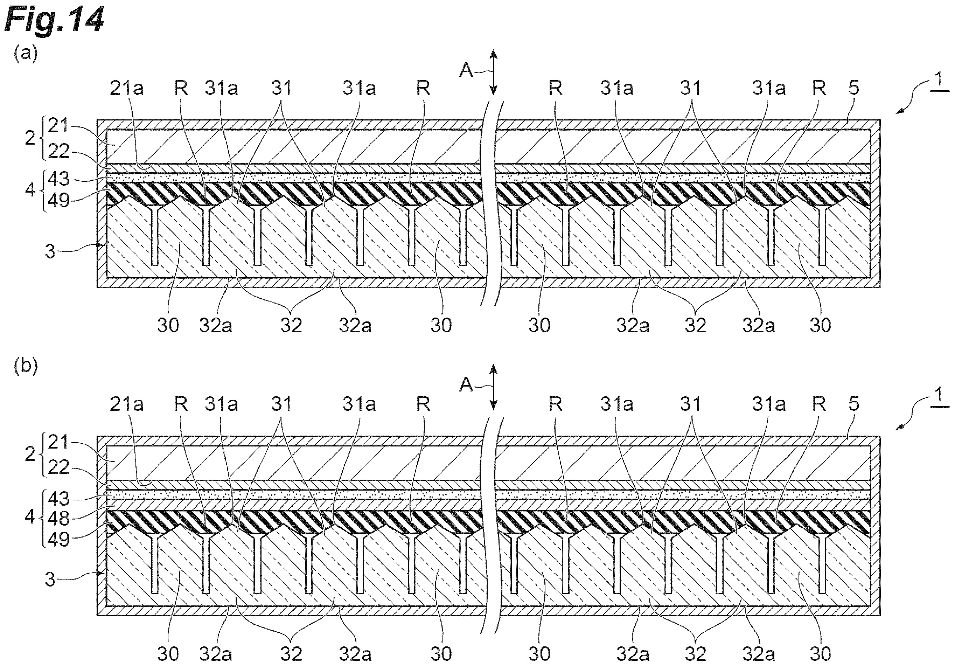

As shown in (a) and (b) in FIG. 14, the intermediate layer 4 includes the organic layer 49 and the adhesive layer 43, and may not include the metal layer 41 and the organic layer 42. The intermediate layer 4 shown in (a) in FIG. 14 differs from the intermediate layer 4 shown in (a) in FIG. 13 in that a part of the organic layer 49 is disposed in the region R between the plurality of first end portions 31. The intermediate layer 4 shown in (b) in FIG. 14 differs from the intermediate layer 4 shown in (b) in FIG. 13 in that a part of the organic layer 49 is disposed in the region R between the plurality of first end portions 31. In this case as well, the intermediate layer 4 capable of exhibiting a light-reflecting function or a light-absorbing function and suppressing the occurrence of cracks in the scintillator layer 3 can be realized.

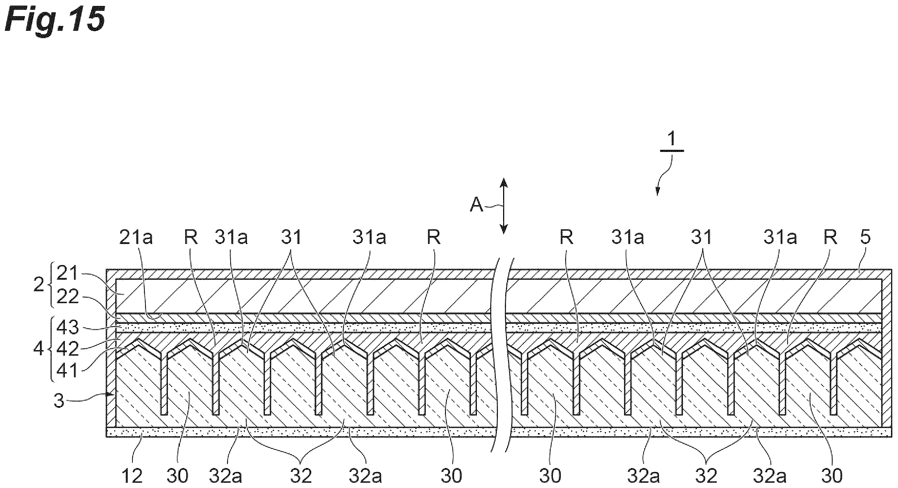

In addition, in the scintillator panel 1, the intermediate layer 4 may not include a layer having a light-reflecting function or a light-absorbing function, and the support substrate 2 may include a layer having a light-reflecting function or a light-absorbing function. In addition, in the scintillator layer 3, the plurality of second end portions 32 may not be connected to each other. In addition, as shown in FIG. 15, the protection layer 5 may not cover the surface on the opposite side of the scintillator layer 3 from the support substrate 2. In this case, the adhesive layer 12 may be formed directly on the surface on the opposite side of the scintillator layer 3 from the support substrate 2 as a part of the scintillator panel 1. In addition, in the scintillator panel 1, when viewed in the direction A, at least a part of the outer edge of the support substrate 2, at least a part of the outer edge of the scintillator layer 3, and at least a part of the outer edge of the intermediate layer 4 may coincide with each other.

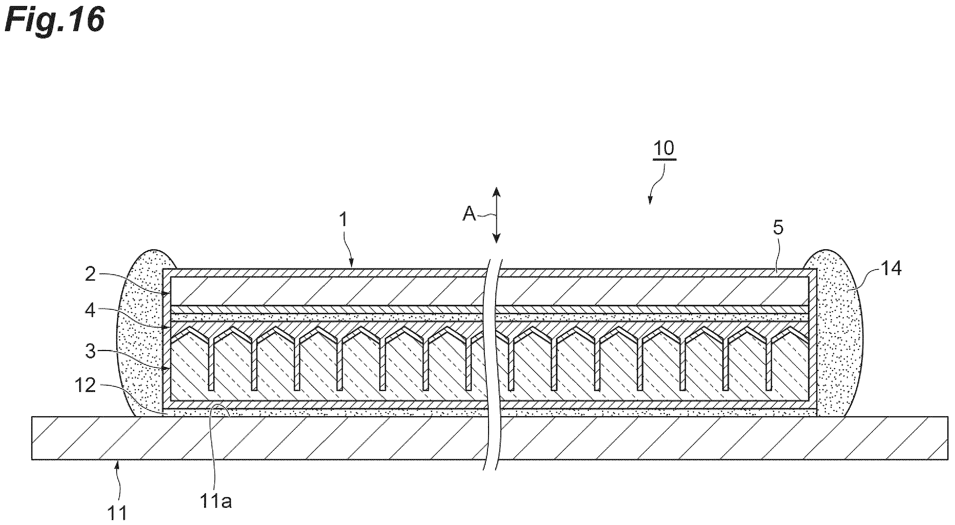

In addition, as shown in FIG. 16, the radiation detector 10 may include a sealing member 14. The sealing member 14 extends in a frame shape in a region surrounding the light receiving surface 11a among surfaces of the sensor panel 11, and covers side surfaces of the scintillator panel 1. The material of the sealing member 14 is, for example, epoxy, silicone, fluorine, urethane, acrylic, or the like. The material of the sealing member 14 may contain a filler material made of an inorganic material such as glass. The material of the filler material may have higher moisture barrier than the main material of the sealing member 7, and may be, for example, SiO₂, Al₂O₃, TiO₂, or the like.

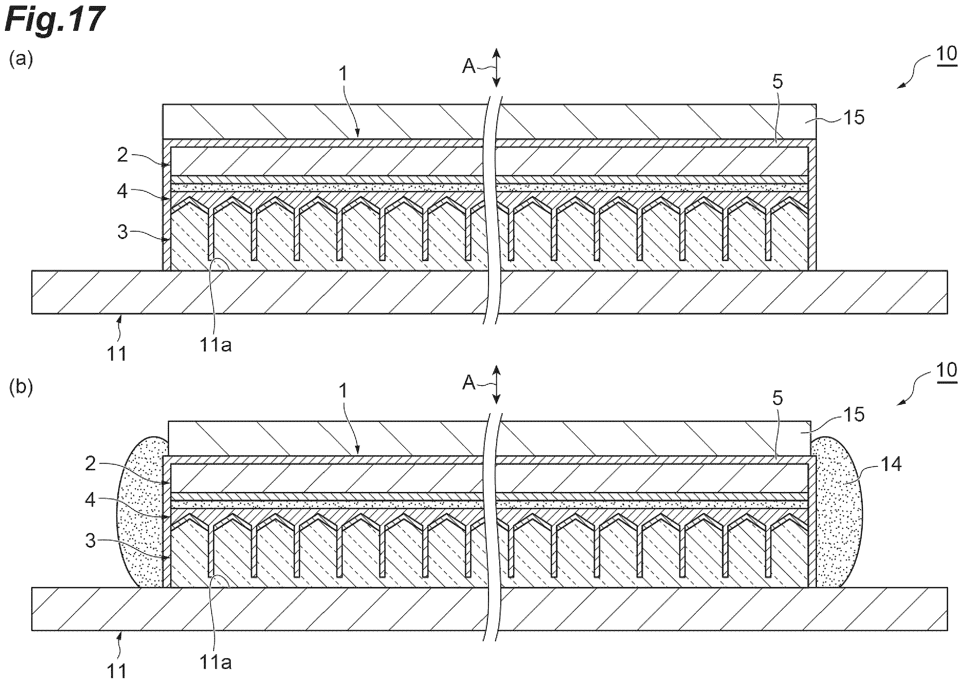

In addition, in the radiation detector 10, as shown in (a) and (b) in FIG. 17, the state of contact between the sensor panel 11 and the scintillator panel 1 may be maintained by disposing the sensor panel 11 and the scintillator panel 1 in a housing (not shown), for example, together with an elastic member 15 such as a sponge, instead of disposing the adhesive layer 12 between the sensor panel 11 and the scintillator panel 1. In addition, in the radiation detector 10, another member such as a fiber optic plate may be disposed between the sensor panel 11 and the scintillator panel 1.

In addition, in the fifth step of the method for manufacturing the scintillator panel 1, at least the scintillator layer 3, the intermediate layer 4, and the support substrate 2 may be cut in the direction A. Namely, in the fifth step, the auxiliary substrate 13 may not be cut. In this case as well, the scintillator layer 3, the intermediate layer 4, and the support substrate 2 can be collectively cut in a stable state where the scintillator layer 3, the intermediate layer 4, and the support substrate 2 are supported by the auxiliary substrate 13. Incidentally, in the fifth step, cuts may be made in the auxiliary substrate 13 as long as the auxiliary substrate 13 is not completely cut.

In addition, in the method for manufacturing the scintillator panel 1, after the fourth step in which the auxiliary substrate 13 is removed from the scintillator layer 3, the scintillator layer 3, the intermediate layer 4, and the support substrate 2 may be further cut in the direction A (sixth step). In this case, the scintillator layer 3, the intermediate layer 4, and the support substrate 2 can be easily and reliably cut to a predetermined size. In addition, in the method for manufacturing the scintillator panel 1, instead of cutting the scintillator layer 3, the intermediate layer 4, and the support substrate 2 before the fourth step in which the auxiliary substrate 13 is removed from the scintillator layer 3, the scintillator layer 3, the intermediate layer 4, and the support substrate 2 may be cut after the fourth step in which the auxiliary substrate 13 is removed from the scintillator layer 3.

### Reference Signs List

1: scintillator panel, 2: support substrate, 3: scintillator layer, 4: intermediate layer, 5: protection layer, 10: radiation detector, 11: sensor panel, 11a: light receiving surface, 12: adhesive layer, 13: auxiliary substrate, 30: columnar crystal, 31: first end portion, 31a: tip, 32: second end portion, 32a: end surface, 41: metal layer, 42, 49: organic layer, R: region.

## Claims

1. A scintillator panel comprising:
a support substrate being flexible;
a scintillator layer including a plurality of columnar crystals; and
an intermediate layer disposed between the support substrate and the scintillator layer,
wherein the plurality of columnar crystals include a plurality of first end portions on a support substrate side and a plurality of second end portions on a side opposite to the support substrate,
each of the plurality of first end portions tapers toward the support substrate side,
each of the plurality of second end portions includes an end surface along a plane, and
a part of the intermediate layer is disposed in at least a region between the plurality of first end portions.

2. The scintillator panel according to claim 1,
wherein the part of the intermediate layer is disposed in at least an entirety of the region between the plurality of first end portions.

3. The scintillator panel according to claim 1 or 2,
wherein when a distance between the support substrate and the scintillator layer is D, the part of the intermediate layer reaches a position advanced by D or more from a plurality of tips included in the plurality of first end portions.

4. The scintillator panel according to any one of claims 1 to 3,
wherein when a thickness of the scintillator layer is T, the part of the intermediate layer reaches a position advanced by 0.2T or more from a plurality of tips included in the plurality of first end portions.

5. The scintillator panel according to any one of claims 1 to 4,
wherein the intermediate layer includes a metal layer formed along a surface of each of the plurality of first end portions, and an organic layer disposed in at least the region between the plurality of first end portions with the metal layer interposed between the organic layer and the plurality of first end portions, and
the metal layer has a light-reflecting function or a light-absorbing function.

6. The scintillator panel according to any one of claims 1 to 4,
wherein the intermediate layer includes an organic layer disposed in at least the region between the plurality of first end portions, and
the organic layer has a light-reflecting function or a light-absorbing function.

7. The scintillator panel according to any one of claims 1 to 6,
wherein when viewed in a thickness direction of the support substrate, at least a part of an outer edge of the support substrate, at least a part of an outer edge of the scintillator layer, and at least a part of an outer edge of the intermediate layer coincide with each other.

8. The scintillator panel according to any one of claims 1 to 7,
wherein the plurality of second end portions are connected to each other.

9. The scintillator panel according to any one of claims 1 to 8, further comprising:
a protection layer covering the support substrate, the scintillator layer, and the intermediate layer.

10. The scintillator panel according to any one of claims 1 to 9, further comprising:
an adhesive layer disposed on a side opposite to the support substrate with respect to the scintillator layer.

11. The scintillator panel according to any one of claims 1 to 10,
wherein when a thickness of the scintillator layer is T, a thickness of the support substrate is 0.2T or more.

12. A radiation detector comprising:
the scintillator panel according to any one of claims 1 to 11; and
a sensor panel including a light receiving surface,
wherein the scintillator panel is disposed on the light receiving surface in a state where the scintillator layer is located on a sensor panel side with respect to the support substrate.

13. A method for manufacturing the scintillator panel according to any one of claims 1 to 11, the method comprising:
a first step of forming the scintillator layer on an auxiliary substrate through vapor deposition;
a second step of forming the intermediate layer on the scintillator layer such that the part of the intermediate layer is disposed in at least the region between the first end portions, after the first step;
a third step of forming the support substrate on the intermediate layer after the second step; and
a fourth step of removing the auxiliary substrate from the scintillator layer after the third step.

14. The method for manufacturing a scintillator panel according to claim 13, further comprising:
a fifth step of cutting at least the scintillator layer, the intermediate layer, and the support substrate in the thickness direction of the support substrate after the third step and before the fourth step.

15. The method for manufacturing a scintillator panel according to claim 14,
wherein, in the fifth step, the auxiliary substrate is cut in the thickness direction of the support substrate, together with the scintillator layer, the intermediate layer, and the support substrate.

16. The method for manufacturing a scintillator panel according to any one of claims 13 to 15, further comprising:
a sixth step of cutting the scintillator layer, the intermediate layer, and the support substrate in the thickness direction of the support substrate after the fourth step.

17. A method for manufacturing the radiation detector according to claim 12, the method comprising:
a first step of preparing the scintillator panel and the sensor panel; and
a second step of disposing the scintillator panel on the light receiving surface such that the support substrate is located on a side opposite to the sensor panel with respect to the scintillator layer, after the first step.
